# EUROPEAN PATENT APPLICATION

(11) **EP 3 199 273 A1**
(43) Date of publication of application: **02.08.2017**
(21) Application number: 16153283.3
(22) Date of filing: 29.01.2016
(51) Int. Cl.: B23B 27/10, B23B 27/16

(54) **A CUTTING TOOL**

(71) Applicant: Seco Tools AB, 737 82 Fagersta (SE)
(72) Inventor: LARSSON, Andreas J, 732 47 Arboga (SE); THELIN, Jimmy, 737 91 Fagersta (SE); JONSSON, Mats, SE 776 92 Hedemora (SE)
(74) Representative: Klöfver, Jörgen

(57) **Abstract**

The present invention relates to a cutting tool comprising a tool holder body (14;14') having a shank portion (12;12') and a head portion (13;13'). The head portion has an insert seat (15;15'), wherein a cutting insert (20;20') is detachably mounted by means of a locking member (18;18'). The seat comprises at least one bottom surface (16;16') on which the cutting insert rests. A coolant conveying member (29;29') is integral with the tool holder body. A normal (N;N') to the at least one bottom surface (16;16') intersects the coolant conveying member, such that the coolant conveying member at least partially covers the cutting insert.

## Description

### FIELD OF THE INVENTION

The present invention relates to a cutting tool for metal chip removing machining and, more particularly, to such cutting tools having coolant flow channels.

### BACKGROUND

It is advantageous to deliver a coolant closely to a cutting area where interaction between a cutting edge and a workpiece takes place. By using a cutting tool having a coolant supply, a coolant can be directed to a cutting edge of the cutting insert for minimizing the heat accumulated due to the interaction of a cutting insert with the machined workpiece. Conventional techniques for providing lubrication and/or coolant to cutting edges of cutting inserts typically involve introducing the coolant via openings in a tool holder for the cutting insert, or via spray nozzles directed at the cutting edges such as in WO 2010/095124 A1, wherein a nozzle is shiftable relative to a member body, between a first, extended position and a second, retracted position. The coolant conveying member usually includes a nozzle that protrudes out from the body of the coolant conveying member, extending over or overlying the cutting insert, e.g., to the proximity of the cutting edge, in order to guide and jet out therethrough coolant fluid, generally directly and precisely on the cutting area. The provision of coolant fluid through such a coolant conveying member contributes, for example, to efficiently expel large amounts of heat accumulated in the cutting area, and additionally obtains desired breaking of work piece chips formed during the cutting operation, improving the surface quality of the work piece being machined. By extending over the cutting insert, the nozzle blocks access to a clamping component that secures the cutting insert in place, and impedes the releasing of the clamping component, thus complicating the indexing or replacing of the cutting insert.

It is desirable to provide a cutting tool that facilitate introduction of coolant to the cutting edges of the cutting insert that is sturdy and reliable.

It is desirable to provide a cutting tool that facilitate introduction of coolant to the cutting edges of the cutting insert that minimizes the distance between the nozzle and the cutting area.

It is desirable to provide a cutting tool that facilitate introduction of coolant to the cutting edges of the cutting insert that minimizes manufacturing complexity.

It is also desirable to provide a cutting tool that facilitate introduction of coolant to the cutting edge without substantially interfering with the tolerances of the cutting insert position.

It is further desirable to provide a cutting tool that is user friendly.

### SUMMARY OF THE INVENTION

According to an aspect of the present invention, a cutting tool comprises a tool holder body having a shank portion and a head portion, the head portion having an insert seat, wherein a cutting insert is detachably mounted by means of a locking member, the seat comprising a bottom surface on which the cutting insert rests, and wherein a coolant conveying member is integral with the tool holder body, and wherein a normal to the at least one bottom surface intersects the coolant conveying member, such that the coolant conveying member at least partially overlies the cutting insert, thereby providing a rigid coolant solution.

According to another aspect of the present invention, the coolant conveying member is spaced from the locking member and the cutting insert when viewed in side view in order not to interfere during assembly of the cutting tool.

According to another aspect of the present invention, the cutting tool has a coolant conduit, and wherein the coolant conveying member comprises at least one coolant channel in flow communication with the coolant conduit, the at least one coolant channel exiting in a front face of the integral coolant conveying member to make sure the exit is positioned close to the active cutting area.

According to another aspect of the present invention, the front face is located in a plane intersecting the bottom surface and/or the cutting insert to provide closeness of the coolant exit to the active cutting area.

According to another aspect of the present invention, the bottom surface has a hole with a radius for making clamping of a cutting insert possible.

According to another aspect of the present invention, the plane intersects the bottom surface at a distance from the radius center of the hole that is less than 3 times the radius thereby to further define the closeness of the coolant channel opening to the active cutting area.

According to another aspect of the present invention, at least one coolant channel is provided below the bottom surface for directing coolant towards a clearance face of the cutting insert to increase flow of coolant.

According to another aspect of the present invention, the coolant conveying member has two coolant channels directed towards an active cutting corner of the cutting insert to increase flow of coolant.

According to another aspect of the present invention, the seat comprises a first convex wall and a second convex wall to define a stationary and well-defined line of contact in relation to the cutting insert.

According to another aspect of the present invention, the first convex wall and the second convex wall form an angle that is 110° or less to be able to hold numerous cutting insert shapes.

According to another aspect of the present invention, at least one of the convex walls is situated on a pin to facilitate manufacturing of the insert seat.

According to another aspect of the present invention, the convex walls are situated on separate first and second pins, which are perpendicular or substantially perpendicular to each other when seen in a side view, to further minimize manufacturing complexity of the insert seat.

According to another aspect of the present invention, each pin is stationarily mounted to the shank and formed of a harder material than the shank for optimal durability.

According to another aspect of the present invention, the second pin extends deeper into the head portion than a height of an exposed part thereof that protrudes above the bottom surface to improve stability of the seat.

According to another aspect of the present invention, the bottom surface is flat all around the second pin to further facilitate seat precision.

### BRIEF DESCRIPTION OF THE DRAWINGS

The features and advantages of the present invention are well understood by reading the following detailed description in conjunction with the drawings in which like numerals indicate similar elements and in which:
FIG. 1A is a perspective view of a cutting tool according to an aspect of the present invention;
FIG. 1B is a front view of a monobloc forming part of the cutting tool in Fig. 1A without a cutting insert;
FIG. 1C is a top view of the monobloc;
FIG. 1D is a side view of the cutting tool without a cutting insert;
FIG. 1E is a top view of the monobloc, partially in section;
FIG. 2A is a perspective view of a cutting tool according to another aspect of the present invention;
FIG. 2B is a perspective view of a tool holder body of the cutting tool shown in FIG. 2A:
FIG. 2C is an enlarged perspective view of the cutting tool shown in FIG. 2A:
FIG. 2D is a front view of the cutting tool in Fig. 2A;
FIG. 2E is a top view of the cutting tool without a cutting insert;
FIG. 2F is a side view of the cutting tool, and
FIG. 2G is a top view of a monobloc forming part of the cutting tool, partially in section.

Each figure in the drawings is drawn to scale. However, sizes of the cutting tools or components thereof maybe reduced or enlarged by a certain amount.

### DETAILED DESCRIPTION

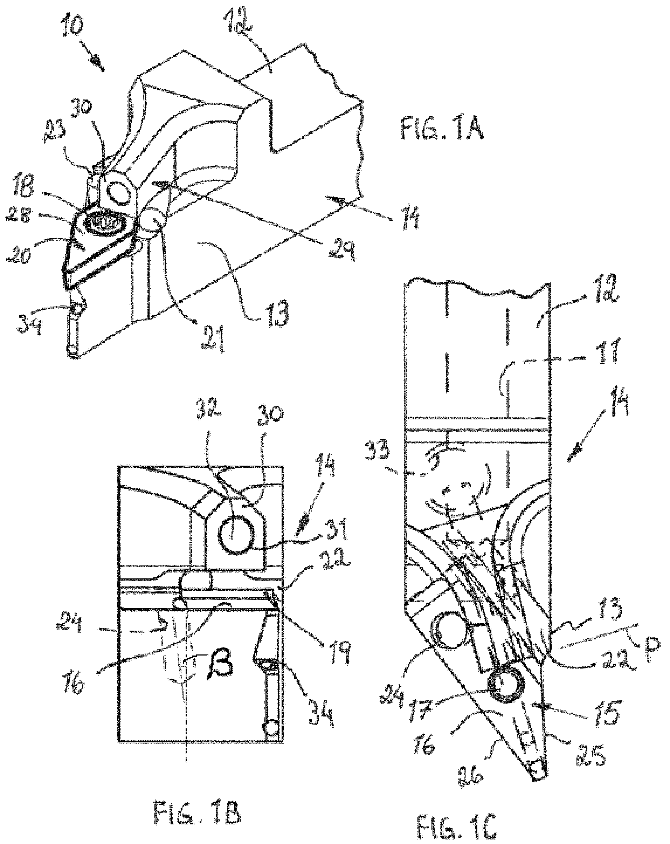

Reference is made to FIGS. 1A-1E showing a cutting tool 10 having a coolant conduit 11 in accordance with an aspect of the present invention. The shown cutting tool 10 may be a turning tool for external metal machining, preferably for use in a Swiss-type lathe. A Swiss-type lathe is a variety of turning machine that feeds the stock through a guide bushing. This means the turning tool can always cut the stock near the bushing, and therefore close to the point of support, no matter how long the workpiece. The machine feeds the work out of the spindle and past the tool as it moves. This makes the CNC Swiss-type particularly effective for long and slender turned parts. Typically, on the Swiss machine, the turning tool is stationary and the workpiece advances. Normally, a cutting tool for a Swiss-type lathe is relatively small, for example less than 20 cm from end to end and less than 3 cm in height.

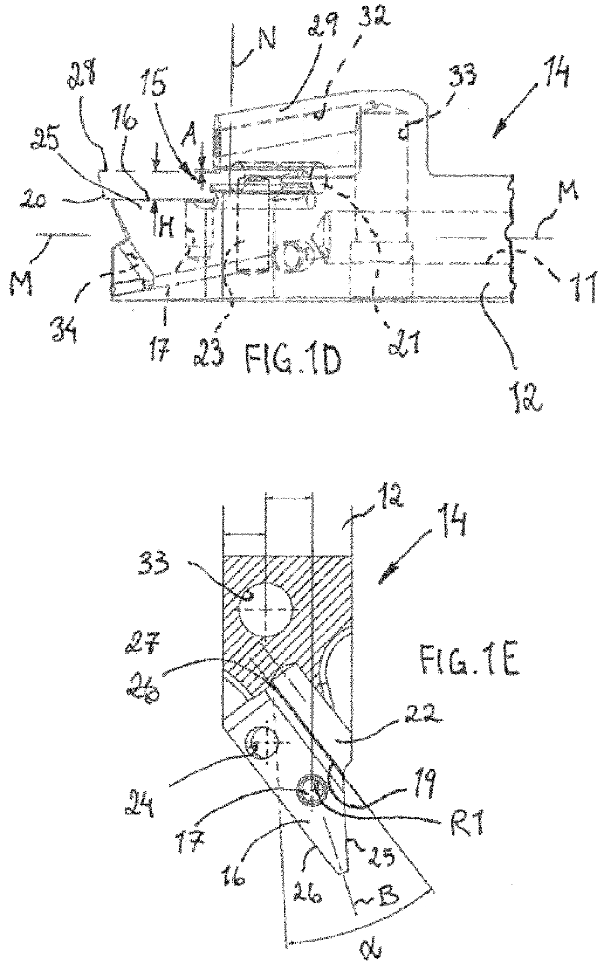

A cutting insert 20 suitable for the cutting tool can be of a single-sided (positive) geometry with a height H (FIG. 1 D) where a clearance surface forms an obtuse angle with a lower face of the cutting insert. Alternatively a suitable cutting insert for the cutting tool can be of a double-sided (negative) geometry where the clearance surface forms 90° angle with the lower face of the cutting insert.

The cutting tool 10 comprises a tool holder body 14 having a shank portion 12 and a head portion 13 at a free end thereof. The shank portion is elongate and supposed to be secured to a tool post in a lathe. The shank portion may have a rectangular cross-section such as square. The shank portion defines a horizontal midplane M.

The shank portion and the head portion are usually made as a one-piece unit or monobloc. The monobloc is normally made from steel.

The head portion 13 has a seat 15 having at least one bottom surface 16, preferably extending parallel to the midplane **M**. The bottom surface may have a recess 17 to accommodate a locking member, such as a screw 18. The cutting insert 20 may have a through hole or mounting hole and the recess 17 may have a radius R1.

The bottom surface may be provided on a removable shim, not shown. A forward end of the head portion may terminate in a pointed portion (see Fig. 1 E). The pointed portion in the top view is defined by sides 25 and 26. The sides 25 and 26 (or cutting insert sides shown in phantom in FIG. 1 E) define an angle α that is 110° or less. That angle is divided by a bisector **B**. Usually the same line bisects the active cutting corner of the cutting insert. The seat 15 is bordered to one side by a first wall 19.

A first convex wall may at least partially be constituted by a first pin 21, which is provided in or inserted into a bore or first cavity 22 that communicates with the wall 19 or is open lengthwise towards the cutting insert. The pin has a convexly curved outer peripheral surface formed by any of a large number of shapes, e.g., cylindrical. The pin 21 is made of a material, such as hardened steel or cemented carbide, having higher hardness than the material of the tool holder body 14.

The cavity 22 is a boring, which extends parallel or substantially parallel to the bottom surface 16. The cavity 22 breaks through or intersects the wall 19, and a small portion of the outer periphery of the pin 21 projects through the cavity 22 and thus extends past the wall 19 and into the seat in a direction towards the cutting insert. The pin projects a distance, which is at most 40% of the diameter of the pin.

The pin 21 is adapted to present a line of contact in relation to the cutting insert 20 that is parallel or substantially parallel to the bottom surface or the midplane **M**. The line of contact is spaced from the bottom surface or a shim corresponding to about a half of the thickness of a suitable cutting insert 20.

The pin may be inserted into the cavity 22 with press fit and/or by deforming material of the holder around the pin.

The seat comprises a second convex wall to define a stationary and well-defined contact in relation to the cutting insert, preferably along a line of contact. The second convex wall may be constituted by a second pin 23 inserted into a bore or second cavity 24 opening into the bottom surface 16. The second cavity or boring or hole and the second pin may each have a center axis extending perpendicularly or substantially (≤ 11°) perpendicularly to the bottom surface. The second cavity 24, and thus the pin 23, inclines at an angle β relative to a normal to the at least one bottom surface 16 that is 0 to 11°, see FIG. 1B, where 0° implies perpendicular relationship to the bottom surface.

In both embodiments the expression "or substantially perpendicularly to the at least one bottom surface", here means that the angle is in the range of 90° and 79°, i.e. the latter being 90°-11°.

The second pin 23 extends deeper into the head portion 13 than a height of an exposed part thereof that protrudes above the bottom surface 16 for increased stability. An extension of the second pin 23 extends to a side of the coolant conveying member 29 to be accessible for being drilled.

The bottom surface 16 may be flat all around the second cavity 24 or the second pin 23.

It is desirable to align an inclination of the second pin 23 to the support surface angle of the cutting insert to achieve a line contact therewith. The second pin center axis usually extends perpendicularly to the bottom surface if the cutting insert to be used is negative.

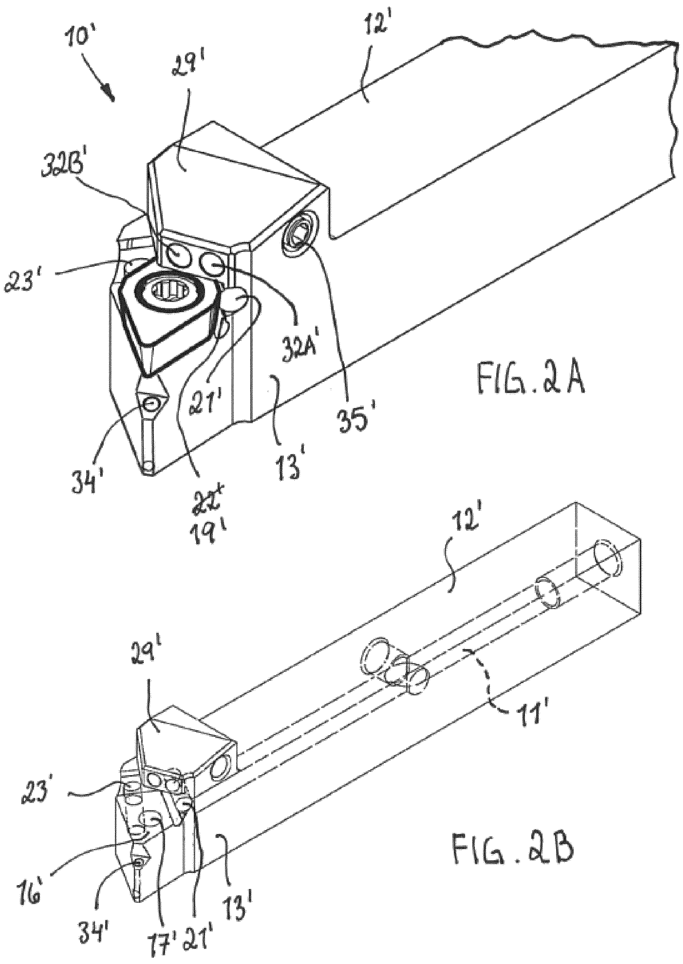

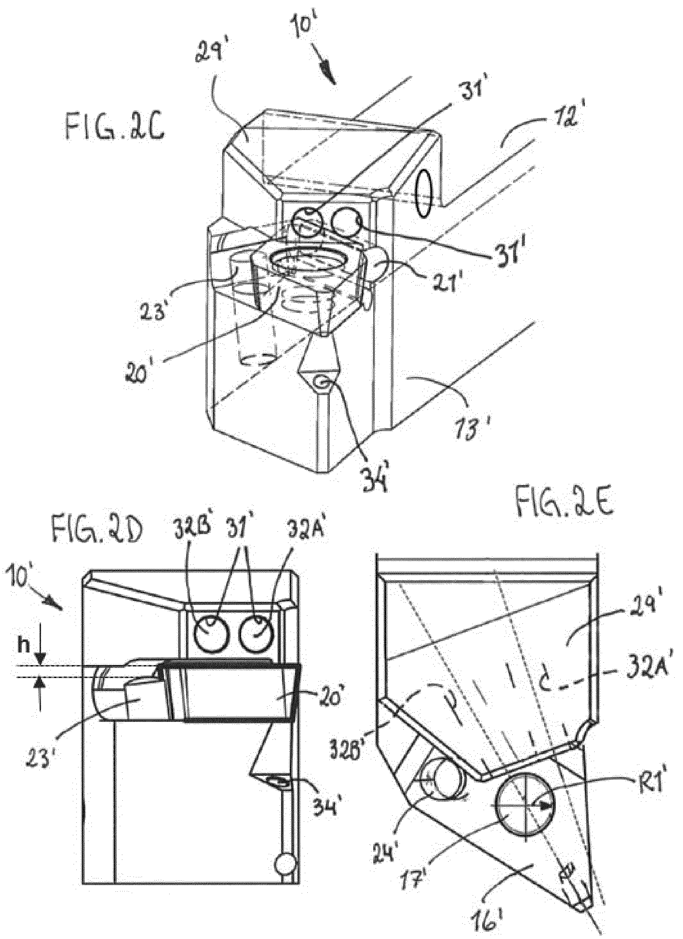

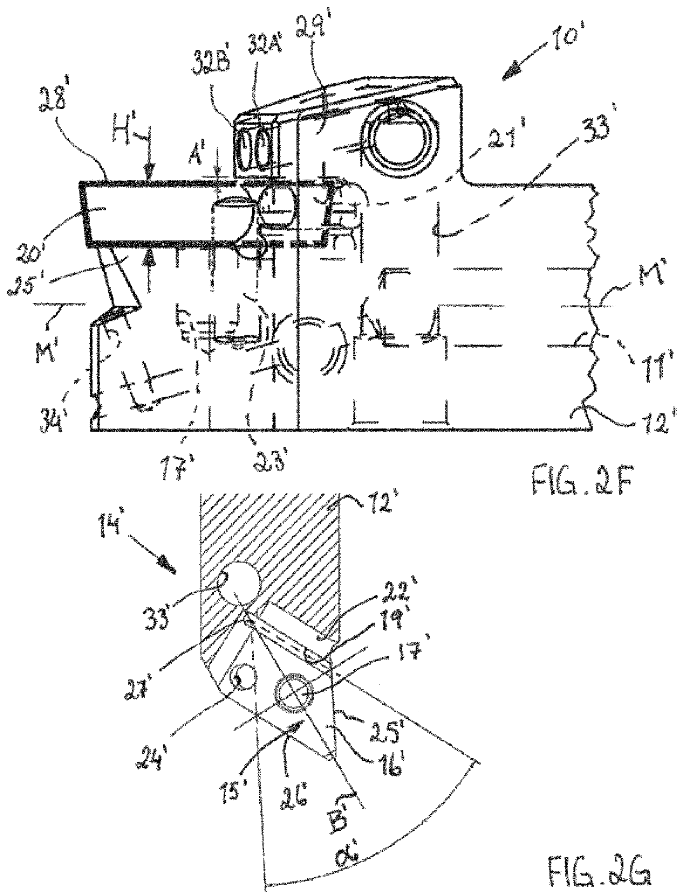

The second pin 23 is located at an opposite side of the bisector **B** relative to a major portion of the first pin 21; the major portion being at least 90% of the first pin 21. When inserted into the hole 24 the second pin will protrude from the bottom surface a distance that is smaller than the height **H** of the cutting insert. Stated another way, a perpendicular distance between the free end of the second pin 23 (or 23' or 23") and the associated cutting edge is depicted by **h** in FIG.2D. This will make sure that the pin does not reach a cutting edge and therefore cannot damage or negatively influence the cutting edge.

The second pin 23 when viewed as in FIG. 1D will intersect a projection of the first pin 21. A center axis of the first pin 21 may be positioned at a level of a free or top end of the second pin 23 when viewed as in FIG. 1D.

The second pin 23 is adapted to present a line of contact in relation to the cutting insert 20 that is perpendicular or substantially perpendicular to the bottom surface or the midplane **M**.

Thus the convex walls comprise separate pins 21 and 23, which are perpendicular or substantially perpendicular to each other when seen in a side view as in FIG. 1D.

The first pin 21 is adapted to present a line of contact in relation to the cutting insert 20 that is parallel or substantially parallel to the bottom surface 16 and the second pin 23 is adapted to present a line of contact in relation to the cutting insert 20 that is perpendicular or substantially perpendicular to the bottom surface. The pins 21 and 23 may be identical or at least of the same diameter such that drilling of the cavities 22, 24 can be facilitated or expedited. The pins 21 and 23 are not meant to be adjustable, i.e. they are usually fixed in position.

The first convex wall or the first pin 21 and the second convex wall or the second pin 23 may receive a wedge of a cutting insert that form an included angle that is 110° or less, for example 55°, or not under 40°, to be able to hold also narrow cutting inserts. Stated another way, tangents to the first convex wall 21 and the second convex wall 23 may form an angle α that is 110° or less.

The second pin 23 may be located to abut at about a quarter of a greatest diagonal length of the cutting insert from an inactive cutting corner (depicted by 27 in FIG. 1 E).

The head portion 13 may be provided with an integral nozzle or inducer or roof portion or coolant conveying member 29, i.e. the coolant conveying member is integral with the tool holder body, which is immovable or not able to be removed without destroying the original construction of the head portion. The coolant conveying member may completely or partially or at least partially overlie or cover the cutting insert when viewed in top view as best seen in FIG. 1C.

A normal **N** to the at least one bottom surface 16 or the upper surface of the cutting insert 20 intersects the coolant conveying member 29, such that the coolant conveying member at least partially cover or overlies the cutting insert.

The coolant conveying member 29 in this embodiment is not meant to clamp on the cutting insert and is thus spaced from the upper surface 28 of the cutting insert by a distance **A** in the range of 0.2 to 3 mm in the direction of the normal **N.** Thus a lower side of the coolant conveying member 29 forms a slot with the bottom surface 16, wherein the smallest width of the slot is greater than a thickness of the cutting insert 20 including any shim. The relative position between the coolant conveying member and the insert seat is constant.

In other words, the coolant conveying member is spaced both from clamping means such as the locking member 18, and the cutting insert 20 when viewed in side view as for example in FIG. 1D.

The front face 30 of the coolant conveying member 29 contains an opening 31, which communicates with a coolant channel 32 that is generally directed towards the active cutting corner of the cutting insert. The coolant channel 32 slopes towards the opening 31 from a higher point where it connects to a vertical passage 33 that in turn connects to the coolant conduit 11. The coolant conduit 11 is in communication with a coolant source, not shown. The vertical passage 33 may be plugged at a lower end.

The front face 30 may be located in a plane **P** intersecting the bottom surface 16 and/or the cutting insert 20 (FIG. 1 C). The plane **P** may be parallel to the normal **N.**

The plane **P** may intersect the bottom surface 16 at a distance from the radius center of the hole 17 that is less than 3 times the radius R1.

The roof portion 29 is arranged spaced apart from an extension of the hole 17.

The tool holder may have least one further coolant channel 34 that is provided below the bottom surface 16 for directing coolant towards a clearance face of the cutting insert 20. The channel 34 connects to the vertical passage 33 via a boring that is plugged at one end.

In use the shown tool will be turning metal work pieces while coolant may flow from the coolant source in order through the coolant conduit 11 in the shank 12, the vertical passage 33, the coolant channel 32 and from the opening 31 to at least one active cutting edge. Optionally, a jet stream of coolant is discharged from a second opening of the least one further coolant channel 34 below the bottom surface 16.

The tool is mounted as follows. The cutting insert 20 is placed against the bottom surface 16 of the seat 15 and pushed inwardly such that converging sides of the cutting insert abut the convex wall 21 and 23, respectively. The screw 18 is moved through the hole in the cutting insert and is threaded firmly into the recess 17. Thereby, the cutting insert is secured to the seat 15. Typically, the screw 18 is caused to mate with the threaded hole in the bottom surface. The threaded hole is ordinarily formed in the bottom surface in a location such that, when the threaded shaft of the screw is inserted through the mounting hole in the insert and screwed into the threaded hole, there is a slight offset of a longitudinal axis of the threaded shaft of the screw in a direction toward the convex walls of the seat from the location of the axis of the mounting hole. Nonetheless, the lower surface of the insert and the bottom surface 16 (both of which are typically flat) can be caused to lie flat against one another. As the screw is screwed further into the threaded hole, a head of the screw urges bottom and sides of the insert 20 into more complete contact with the bottom and convex walls of the seat.

Reference is made to FIGS. 2A to 2G showing a cutting tool 10' having a coolant conduit 11' in accordance with another aspect of the present invention. The drawings have been annotated with like numerals that indicate similar elements as in the previous described embodiment.

The shown cutting tool 10' may be a turning tool for external metal machining, preferably for use in a Swiss-type lathe as discussed above. Normally, a cutting tool for a Swiss-type lathe is relatively small, for example less than 20 cm from end to end and less than 3 cm in height.

The main difference from the previously described embodiment lies in the use of two coolant channels 32A' and 32B' in the coolant conveying member 29'. The front face 30' of the coolant conveying member 29' contains two openings 31', which each communicates with a coolant channel 32A', 32B' that is generally directed towards the active cutting corner of the cutting insert. The coolant channels 32' slope towards the openings 31' from a higher point where they connect to a vertical passage 33' that in turn connects to the coolant conduit 11'. The vertical passage 33' supplies fluid via a horizontal bore intersecting the inner ends of the coolant channels to the openings 31'. The horizontal bore is plugged by a screw 35'. The coolant conduit 11' is in communication with a coolant source, not shown.

The openings 31' in the front face 30' may be located in a plane **P'** intersecting the bottom surface 16' and/or the cutting insert 20' (FIG. 1 C). The plane **P'** may be parallel to the normal **N'.** The cutting insert 20' may have a through hole or mounting hole and the recess 17' may have a radius R1'.

The directions of the coolant channels 32A', 32B' converge towards the cutting area.

The first pin 21' is adapted to present a line of contact in relation to the cutting insert 20' that is parallel or substantially parallel to the at least one bottom surface 16' and the second pin 23' is adapted to present a line of contact in relation to the cutting insert 20' that is perpendicular or substantially perpendicular (≤ 11°) to the at least one bottom surface.

The second pin 23' extends deeper into the head portion 13' than a height of an exposed part thereof that protrudes above the bottom surface. An extension of the second pin 23' extends to a side of the coolant conveying member 29'.

The bottom surface 16' may be flat all around the second cavity 24' or the second pin 23'.

Tool life generally increases with increase in coolant supply pressure. This can be attributed to the ability of the high-pressure coolant to lift the chip and gain access closer to the cutting interface. This action leads to a reduction of the seizure region, thus lowering the friction coefficient, which in turn results in reduction in cutting temperature and cutting forces. Preferably the pressure used in the discussed embodiments is above 30 bar, preferably above 100 bar coolant pressure.

The present invention facilitates seat production while having a coolant opening fixed close to the active cutting area. There is a limited need for spare parts because the coolant nozzle is built into the tool holder design and therefore handling of small tools is facilitated.

If using a standard seat configuration the manufacturing cost would be high but in the present solution when using convex walls such as pins a seat can be produced that is easy to manufacture at a low cost while maintaining high quality with fine tolerances.

The invention is applicable for all types of insert seats such as for turning, milling, drilling and boring.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such. Terms such as "major", "minor", "upper", "lower", "top", "bottom", "forward" and "rear" refer to features as shown in the current drawings and as perceived by the skilled person.

While this invention has been illustrated and described in accordance with a preferred embodiment, it is recognized that variations and changes may be made therein without departing from the invention as set forth in the claims.

## Claims

1. A cutting tool comprising;
a tool holder body (14;14') having a shank portion (12;12') and a head portion (13;13');
the head portion having an insert seat (15;15'), wherein a cutting insert (20;20') is detachably mounted by means of a locking member (18;18'), the seat comprising at least one bottom surface (16;16') on which the cutting insert rests,
**characterized in that** a coolant conveying member (29;29') is integral with the tool holder body, and **in that** a normal (N;N') to the at least one bottom surface (16;16') intersects the coolant conveying member, such that the coolant conveying member at least partially covers the cutting insert.

2. The tool according to claim 1, wherein the coolant conveying member (29;29') is spaced from the locking member (18;18') and the cutting insert (20;20') when viewed in side view.

3. The tool according to claim 1 or 2, wherein the cutting tool (10;10') has a coolant conduit (11;11'), and wherein the coolant conveying member (29;29') comprises at least one coolant channel (32;32') in flow communication with the coolant conduit, the at least one coolant channel exiting in a front face (30;30') of the integral coolant conveying member (29;29').

4. The tool according to claim 3, wherein the front face (30;30') is located in a plane (P;P') intersecting the bottom surface (16;16') and/or the cutting insert (20;20').

5. The tool according to anyone of claims 1-4, wherein the bottom surface (16;16') has a hole (17;17') with a radius (R1;R1').

6. The tool according to claim 4, wherein the plane (P;P') intersects the bottom surface (16;16') at a distance from the radius center of the hole (17;17') that is less than 3 times the radius (R1 ;R1').

7. The tool according to anyone of the preceding claims, wherein at least one coolant channel (34;34') is provided below the bottom surface (16;16') for directing coolant towards a clearance face of the cutting insert (20;20').

8. The tool according to anyone of the preceding claims,, wherein the coolant conveying member (29') has two coolant channels (32A',32B') directed towards an active cutting corner of the cutting insert.

9. The tool according to anyone of the preceding claims, wherein the seat (15;15') comprises a first convex wall (19;19') and a second convex wall.

10. The tool according to claim 9, wherein tangents to the first convex wall (19;19') and the second convex wall form an angle (α) that is 110° or less.

11. The tool according to claim 9 or 10, wherein at least one of the convex walls is situated on a pin (21,23;21',23').

12. The tool according to claim 9, 10 or 11, wherein the convex walls are situated on separate first and second pins (21,23;21',23'), which are perpendicular or substantially perpendicular to each other when seen in a side view.

13. The tool according to claim 10, wherein each pin (21,23;21',23') is stationarily mounted to the shank and formed of a harder material than the shank.

14. The tool according to anyone of claims 12 - 13, wherein the second pin (23;23') extends deeper into the head portion (13;13') than a height of an exposed part thereof that protrudes above the bottom surface (16;16').

15. The tool according to anyone of claims 12 - 14, wherein the bottom surface (16;16') is flat all around the second pin (23;23').
